# EUROPEAN PATENT APPLICATION

(11) **EP 2 937 000 A1**
(43) Date of publication of application: **28.10.2015**
(21) Application number: 14179584.9
(22) Date of filing: 01.08.2014
(51) Int. Cl.: A23L 3/36, A23L 3/375, F25D 3/11

(54) **Apparatus and method for reducing the temperature of a product**

(30) Priority: 23.04.2014 US 201414259582
(71) Applicant: Linde Aktiengesellschaft, 80331 München (DE)
(72) Inventor: Newman, Michael D., Hillsborough, NJ 08844 (US)
(74) Representative: Hofmann, Andreas

(57) **Abstract**

In order to overcome problems that earlier apparatus and methods have experienced, an apparatus (10) for reducing the temperature of a product (26) as well as a corresponding method are proposed, said apparatus (10) comprising:
- a housing (12) having a chamber (18) therein, and an inlet (20) and an outlet (22) in communication with the chamber (18);
- a plurality of zones (40, 42, 44, 46) in the chamber (18) between the inlet (20) and the outlet (22), each one of the plurality of zones (40, 42, 44, 46) having a corresponding heat transfer rate atmosphere and said plurality of zones (40, 42, 44, 46) being arranged in descending order of heat transfer rate atmospheres from the inlet (20) to the outlet (22);
- a heat transfer apparatus (34, 36) disposed in the chamber (18) at each one of the plurality of zones (40, 42, 44, 46), the heat transfer apparatus selected from at least one of a fan (36), a cryogenic spray nozzle (34), and combinations thereof;
- a conveyor assembly (24) for transferring the product (26) from the inlet (20) through the plurality of zones (40, 42, 44, 46) to the outlet (22);
- a controller (48) in communication with the chamber (18), the plurality of zones (40, 42, 44, 46), the heat transfer apparatus (34, 36), the conveyor assembly (24) and the heat transfer rate atmospheres, the controller (48) having stored therein data of physical characteristics and a heat transfer profile of the product (26) to adjust and control the heat transfer rate atmospheres for the product (26), such that a heat transfer rate of the product (26) will decrease as the product (26) is transferred from the inlet (20) through each one of the plurality of zones (40, 42, 44, 46) to the outlet (22); and
- a sensor (50) disposed at each of the chamber (18), the plurality of zones (40, 42, 44, 46), the heat transfer apparatus (34, 36), the conveyor assembly (24) and the heat transfer rate atmospheres, and communicating with the controller (48) for transmitting and/or receiving signals therewith.

## Description

### Technical field of the present invention

The present invention basically relates to freezing systems and methods, especially for food products.

### Technological background of the present invention

When a product is frozen, such as a food product, and such as with liquid nitrogen, there exists large temperature differences between the product and an operating temperature of the freezing system employed to freeze the product. These large temperature differentials are ideal for freezing a product quickly.

In addition, a highly convective environment can then be utilized to accelerate the freezing process. Moreover, cryogen can be sprayed directly onto the product for a more aggressive evaporative heat transfer at the surface of the product.

As the food product enters a cryogenic freezing process, the food product, being at a warmer temperature than the freezing system, will immediately start transferring heat to its surroundings as it undergoes freezing. The faster the heat is transferred from the product, the quicker the product will freeze.

However, there are certain physical limitations that come into effect as the product transfers heat to its surrounding environment.

First, the product can only transfer heat from its surface. Therefore, surface heat is removed initially very quickly as the product is frozen.

Second, the amount of cooling applied to the surface in terms of convection, conduction or evaporative cooling impacts the rate at which heat can be further removed from the surface. Therefore, early in the freezing process it is beneficial to have maximum surface heat transfer.

As the product continues to freeze and its surface gets colder, the rate at which heat can physically be removed from the product decreases. This is because the internal heat from the product must now travel to the product's surface by way of conduction, ultimately warming the outer surface from which heat is being removed.

The rate at which the product can transfer heat to the surface is limited by its composition and physical properties. The rate of heat removal or heat flux is measured in Watts/square meter (W/m²) and is an exponentially decaying process with time.

Accordingly, there are two factors which impact the freezing process. The first factor is the actual state and physical properties of the product which will give up heat. That is, each type of product will demonstrate a unique heat removal profile. The second factor is the means or type of cooling applied to the product surface to remove this heat.

In known freezing processes, the applied surface heat transfer coefficient is constant throughout the freezing process. In some situations, liquid nitrogen may be applied directly to the product surface either upon entering or exiting the freezing process, but this is the extent of variability.

Current known freezing methods use forceful heat transfer mechanisms and processes unrelated to the physical and thermodynamic properties of individual products, i.e. a "one size fits all" approach or application.

The process of applying a high heat transfer coefficient to the surface of the product is typically achieved by means of convection. That is, gas can be pressurized, usually by internal fans of the freezing system, and this high velocity gas is brought into contact with the food product surface.

In order to achieve these high gas velocities, power must be used to drive the fans. Power and velocity are directly proportional, i.e. higher velocities equate to higher power requirements.

The benefit of higher velocities is increased convective surface heat transfer as discussed above, while the disadvantage of the higher velocity is a decrease in overall freezing efficiency due to increased power requirements to provide the increased velocity.

The overall freezing efficiency is decreased because some of the energy transferred to the gas for the purpose of accelerating it, also takes the form of heat. This heat energy decreases the overall effective cooling capacity and efficiency of the system.

### Disclosure of the present invention: object, solution, advantages

Taking the prior art as discussed into account, an object of the present invention is to overcome problems that earlier apparatus and methods have experienced. This object is accomplished by an apparatus comprising the features of claim 1 as well as by a method comprising the features of claim 8. Advantageous embodiments and expedient improvements of the present invention are disclosed in the respective dependent claims.

The present invention basically provides for a freezer apparatus and method, in particular for a heat flux freezer control apparatus and a heat flux freezer control method, wherein the rate at which a product, such as a food product, gives up or loses its heat is equal to the rate at which a convective environment removes the heat from the product surface.

Accordingly, it is not necessary to use additional energy for freezing of the product, i.e. for each type of product, the freezing process can be customized to balance the rate at which a product gives up heat (the product's unique heat removal profile) to the degree of heat transfer provided to the surface of the product to remove the heat. When this balance point is achieved, an efficiency of the process is realized and optimized.

According to the present invention, the apparatus and method for reducing the temperature of the product may include
- a housing having a chamber therein, and an inlet and an outlet in communication with the chamber;
- a plurality of zones in the chamber between the inlet and the outlet and arranged in descending order of heat transfer rate atmospheres for the product from the inlet to the outlet;
- a heat transfer apparatus disposed in the chamber at each one of the plurality of zones, the heat transfer apparatus selected from at least one of a fan, a cryogenic spray nozzle, and combinations thereof;
- a conveyor assembly for transferring the product from the inlet through the plurality of zones to the outlet;
- a controller in communication with the chamber, the plurality of zones, the heat transfer apparatus, the conveyor assembly and the heat transfer rate atmospheres, the controller having stored therein physical characteristics and a heat transfer profile of the product to adjust and control the heat transfer rate atmospheres for the product such that a heat transfer rate of the product will decrease as the product is transferred from the inlet through each one of the plurality of zones to the outlet; and
- a sensor disposed at each of the chamber, the plurality of zones, the heat transfer apparatus, the conveyor assembly and the heat transfer rate atmospheres, and communicating with the controller for transmitting and/or receiving signals therewith.

For purposes herein, the terms "transeiver" and "transeive" refer to a component or feature of the present invention that is adapted or able to transmit and receive signals, or provide feedback, containing information and/or instructions.

In such an apparatus, steps may be employed to insure that energy is not used unnecessarily. That is, the product may advantageously be analyzed prior to freezing the product, and such analyzing step expediently may characterize and quantify product dimensions, product composition, moisture content, and a temperature of the product prior to entering the freezer apparatus.

More particularly, the method of the present invention for reducing the temperature of the product may comprise:
- identifying physical characteristics and a heat profile of the product prior to reducing the temperature of the product;
- exposing the product to a plurality of heat transfer rate atmospheres arranged in descending order of heat transfer rates, said exposing the product occurring first at a first one of the plurality of heat transfer rate atmospheres having a greatest heat transfer rate;
- sensing the temperature of the product during the exposing to the plurality of heat transfer rate atmospheres; and
- adjusting and controlling the heat transfer rates responsive to the temperature sensed and corresponding heat profile of the product.

According to a favoured embodiment of the present invention, a control system for the apparatus may be programmed with one or more of the parameters (product dimensions, product composition, product moisture content, product temperature prior to entering the freezer apparatus).

The control system may also be programmed for a given production rate of the product with respect to its freezing. Accordingly, the apparatus may then optimize the freezing process in view of the parameters discussed above and the given production rate for such product.

According to a preferred embodiment of the present invention, a high heat transfer process may be applied at the initial stage of the freezing, and thereafter heat transfer may diminish as the product freezes.

More particularly, an inlet zone of the plurality of zones may be located adjacent the inlet of the chamber and may comprise the greatest heat transfer rate atmosphere. Correspondingly, an outlet zone of the plurality of zones may be located adjacent the outlet of the chamber and may comprise the lowest heat transfer rate atmosphere.

The convective transfer environment and/or the conductive heat transfer environment, advantageously by the convection fans and/or by the cryogen spray assemblies, respectively, may expediently be in communication with the control system such that the fans and cryogen spray can be automatically adjusted throughout the production as the incoming product temperatures, production rates or products themselves change.

That is, fan speeds and thus gas velocities may favourably be adjusted based upon desired freezing profiles of the products, cryogenic sprays including but not limited to droplet size, degree of atomization, flow rate and pressure can all be adjusted to set a desired evaporative heat transfer effect on the surface of the product.

According to an advantageous embodiment of the present invention, the at least one cryogenic spray nozzle may provide a chilling medium selected from at least one of carbon dioxide, nitrogen, and liquid air.

More particularly, at least one of the plurality of heat transfer atmospheres may comprise a cryogen, for example selected from the group consisting of carbon dioxide, nitrogen, and liquid air.

The above-mentioned step of exposing the product to a plurality of heat transfer rate atmospheres may comprise circulating at least one of the plurality of heat transfer rate atmospheres with at least one fan apparatus.

The residence time of the product during exposure to the heat transfer environment or atmospheres may preferably be also controlled. More particularly, the above-mentioned step of adjusting and controlling the heat transfer rates may comprise reducing exposure of the product to the heat transfer rate atmospheres and/or reducing the heat transfer rates.

The apparatus according to the present invention and the method or process according to the present invention can be retrofitted to existing freezing systems.

### Brief description of the drawings

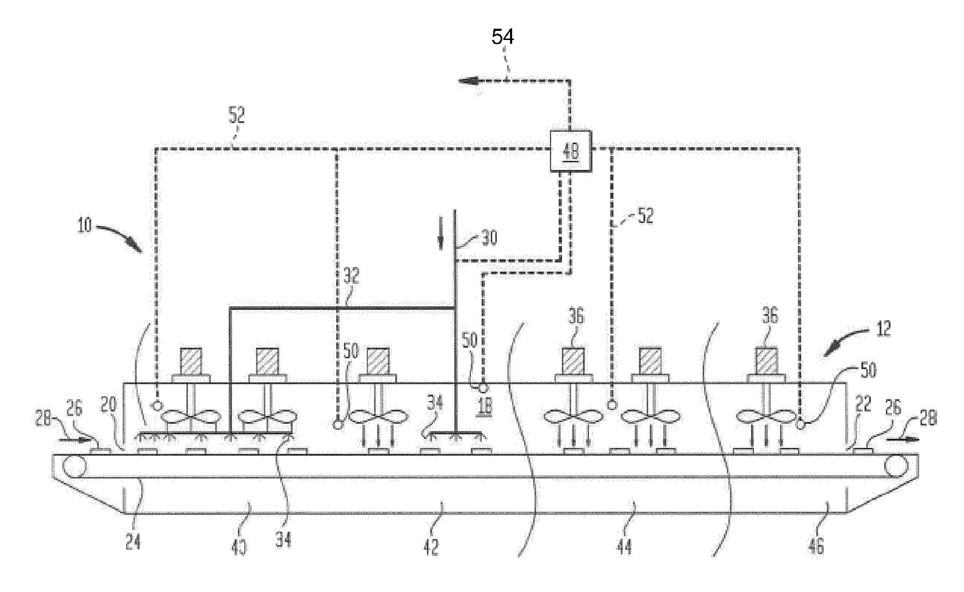

For a more complete understanding of the present embodiment disclosures and as already discussed above, there are several options to embody as well as to improve the teaching of the present invention in an advantageous manner. To this aim, reference may be made to the claims dependent on claim 1 as well as on claim 8; further improvements, features and advantages of the present invention are explained below in more detail with reference to particular and preferred embodiments by way of nonlimiting example and to the appended drawing figure taken in conjunction with the following description of the embodiments, of which:
The drawing figure shows a schematic view of a heat flux control system apparatus of the present invention, said apparatus working according to the related method of the present invention.

### Detailed description of the drawings; best way of embodying the present invention

Before describing the present inventive embodiments in detail, it is to be understood that the inventive embodiments are not limited in their application to the details of construction and arrangement of parts illustrated in the accompanying drawing figure, since the present invention is capable of other embodiments and of being practiced or carried out in various ways. Also, it is to be understood that the phraseology or terminology employed herein is for the purpose of description and not of limitation.

The disclosure of US 2011/0151088 A1 is hereby incorporated by reference.

A heat flux freezer control apparatus ("freezer apparatus") is shown in the drawing figure generally at 10.

The apparatus 10 includes a housing 12 or enclosure having an inlet 20 and an outlet 22. A freezing chamber 18 is provided at an interior of the housing 12 in communication with the inlet 20 and the outlet 22. The inlet 20 and outlet 22 may be disposed at opposed ends or sides of the housing 12, or where best to facilitate a freezing application.

A conveyor belt 24 moves for operation through the chamber 18. That is, the conveyor belt 24 extends from the inlet 20 through the freezing chamber 18 to the outlet 22 for conveying or transporting products 26, such as for example food products, through the freezing chamber 18. Arrows 28 identify the direction of movement of the conveyor belt 24 with respect to the freezing chamber 18.

A pipe 30 or conduit extends into and through the housing 12 to the freezing chamber 18 to introduce a cryogen from a remote source (not shown) into the chamber 18. The pipe 30 may be branched at for example 32, the branched portion 32 also extending into and through the housing 12 into the freezing chamber 18.

Each one of the pipes 30, 32 terminate in at least one injection nozzle 34. A cryogen, such as for example carbon dioxide, nitrogen or liquid air, is introduced into the pipes 30, 32 and emitted from the corresponding ones of the injection nozzles 34 connected to ends of the pipes.

Gas moving or circulation devices, such as for example fan assemblies 36 or apparatus, are mounted to move and circulate the cryogen emitted from the nozzles 34 in the freezing chamber 18. The temperature in the freezing chamber 18 is from -250°Fahrenheit (= about -157°Celsius) to 0°Fahrenheit (= about -18°Celsius).

The housing 12 and hence the freezing chamber 18 is provided with a plurality of zones 40, 42, 44, 46 (referred to collectively as 40 to 46) each zone 40 to 46 having a corresponding heat transfer rate atmosphere. The zones 40 to 46 as shown in the drawing figure are arranged in order of highest heat flux zone 40 (Zone 1) closest to the inlet 20 to a lowest heat flux zone 46 (Zone 4) at the outlet 22.

In operation, a product 26 enters the apparatus 10 and is immediately sprayed with cryogen and subjected to a highly convective environment in zone 40. Zone 40 is the highest heat flux zone in the apparatus 10.

The product 26 then travels through the freezing chamber 18 and zones 42 to 46 (additional zones may be used and other configurations employed) where heat flux is diminished until the product 26 is completely frozen and is discharged from the outlet 22.

Based on the thermal characteristics of the product 26 introduced at the inlet 20 and the rate at which the product needs to be frozen, the fan assembly 36 speed and cryogen injection rate, degree of atomization, and cryogen droplet size will be adjusted to control the desired heat flux curve for the product as it passes from and through the zones 40 to 46 of the apparatus.

A controller 48 of the apparatus 10 is in communication with the freezing chamber 18 and in particular the conveyor belt 24, injection nozzles 34, fan assemblies 36 and the zones 40 to 46. Communication can be by sensors 50 or other known transceiver or measurement devices.

The sensors 50 are wired to the controller 48 as indicated by broken lines 52 through which signals are transmitted to and from the controller. The signals can also be transceived wirelessly between the controller 48 and components controlled thereby.

The characteristics and physical qualities of the product dimensions, composition, moisture content and temperature of the product 26 prior to same entering the inlet 20 are loaded into the controller 48. The physical characteristics and temperature of the product 26 in the freezing chamber 18 are identified before reducing a temperature of the product while in the freezing chamber.

The controller 48 adjusts and controls the heat transfer rate atmosphere and therefore the heat transfer rate at each of the zones 40 to 46 in response to a temperature sensed of the product 26.

Depending upon the production rate of the product, the freezing characteristics that will have to be employed, and the heat transfer profile of the product, such will be taken into consideration by the controller 48 to adjust the speed of the conveyor belt 24 and hence the speed of the product 26 through the freezing chamber 18 and/or the residence time of the product 26 in each one of the zones 40 to 46 of the freezing chamber 18.

In addition, the amount of the cryogen being sprayed from the nozzles 34 on to the product 26, as well as the speed of the fans 36 will also be controlled by the controller 48. In effect, the products are subjected to the highest heat flux in the zone 40, i.e. closed to the inlet 20, with the heat flux being reduced as the products 26 are transferred to the subsequent zones 42 to 46.

Such a freezing process calls for sensing the temperature of the product during exposure of the product to the zones 40 to 46 for determining the heat transfer rate of the product in view of the product's unique heat transfer profile, and a reduction in freezing upon the actual frozen state of the product 26, which thereby optimizes use of the freezing medium, e.g. whether the cryogen spray is used and/or whether instead a convective fan gas flow is used.

The chamber 18 may contain both fan assemblies 36 and cryogenic spray nozzles 34, each of which can be used independently or in conjunction with each other. The fan assemblies 36 or apparatus and the cryogenic spray nozzles 34 may be each individually referred to as a heat transfer assembly or apparatus.

The heat transfer apparatus 34, 36 may be arrange in any combination in the zones 40 to 46, and for most applications at least two of the zones with their respective heat transfer rate atmospheres should have said heat transfer apparatus disposed therein to provide the descending heat transfer effect between the at least two zones.

By way of example only, the zone 40 could include both the cryogen spray nozzles 34, and the zone 46 could include the fan apparatus 36. Further by way of example only, a combination of the fan assemblies 36 and cryogenic spray nozzles 34 will provide the greatest heat transfer rate of the product 26 and therefore, such an arrangement would first act upon the product as it enters the freezing chamber 18 from the inlet 20.

The fan assemblies 36 at the outlet 22 have the lowest heat transfer rate in the chamber 18. Accordingly, zone 40 and zone 46 would each provide the corresponding extremes of highest heat transfer rate and lowest heat transfer rate, respectively.

Therebetween, the zones 42, 44 would have decreasing heat transfer rates, respectively. That is, zone 42 would have perhaps fewer fan assemblies 36 and nozzles 34 than zone 40, while zone 44 would have fewer still, perhaps only a pair of fan assemblies 36, than zone 42. The zone 46 would have only one fan assembly 36, for example, as the heat transfer demand is lowest at this point before the outlet 22.

Fans 36 alone provide the lowest heat removal or heat flux rate, cryogenic spray alone the next highest heat removal rate, while a combination of fans and cryogenic spray provides the highest heat transfer rate.

Therefore, flexibility to vary the heat flux or heat transfer rate in the apparatus 10 can be obtained by the controller 48 employing any combination of fans 36 and nozzles 34 in the zones 40 to 46 to act upon the product 26.

It will be understood that the embodiments described herein are merely exemplary, and that one skilled in the art may make variations and modifications without departing from the spirit and scope of the present invention. All such variations and modifications are intended to be included within the scope of the present invention as described and claimed herein. Further, all embodiments disclosed are not necessarily in the alternative, as various embodiments of the present invention may be combined to provide the desired result.

**List of reference numerals**
- 10: freezer apparatus, in particular heat flux freezer control apparatus
- 12: housing or enclosure
- 18: chamber, in particular freezing chamber
- 20: inlet
- 22: outlet
- 24: conveyor assembly or conveyor belt
- 26: product, in particular food product
- 28: direction of movement of conveyor belt 24 with respect to freezing chamber 18
- 30: pipe or conduit
- 32: branch or branched portion of pipe or conduit 30
- 34: (part of) heat transfer apparatus, in particular injection nozzle or spray nozzle, for example cryogenic injection nozzle or cryogenic spray nozzle
- 36: (part of) heat transfer apparatus, in particular gas circulation device or gas moving device, for example convection fan, such as fan assembly or fan apparatus
- 40: inlet zone or first zone or zone 1, in particular with highest heat flux or with highest heat transfer rate
- 42: second zone or zone 2, in particular with second highest heat flux or with second highest heat transfer rate
- 44: third zone or zone 3, in particular with second lowest heat flux or with second lowest heat transfer rate
- 46: outlet zone or fourth zone or zone 4, in particular with lowest heat flux or with lowest heat transfer rate
- 48: controller
- 50: transceiver or measurement device, in particular sensor
- 52: wiring of transceiver or measurement device 50 to controller 48
- 54: to/from conveyor

## Claims

1. An apparatus (10) for reducing the temperature of a product (26), comprising:
- a housing (12) having a chamber (18) therein, and an inlet (20) and an outlet (22) in communication with the chamber (18);
- a plurality of zones (40, 42, 44, 46) in the chamber (18) between the inlet (20) and the outlet (22), each one of the plurality of zones (40, 42, 44, 46) having a corresponding heat transfer rate atmosphere and said plurality of zones (40, 42, 44, 46) being arranged in descending order of heat transfer rate atmospheres from the inlet (20) to the outlet (22);
- a heat transfer apparatus (34, 36) disposed in the chamber (18) at each one of the plurality of zones (40, 42, 44, 46), the heat transfer apparatus selected from at least one of a fan (36), a cryogenic spray nozzle (34), and combinations thereof;
- a conveyor assembly (24) for transferring the product (26) from the inlet (20) through the plurality of zones (40, 42, 44, 46) to the outlet (22);
- a controller (48) in communication with the chamber (18), the plurality of zones (40, 42, 44, 46), the heat transfer apparatus (34, 36), the conveyor assembly (24) and the heat transfer rate atmospheres, the controller (48) having stored therein data of physical characteristics and a heat transfer profile of the product (26) to adjust and control the heat transfer rate atmospheres for the product (26), such that a heat transfer rate of the product (26) will decrease as the product (26) is transferred from the inlet (20) through each one of the plurality of zones (40, 42, 44, 46) to the outlet (22); and
- a sensor (50) disposed at each of the chamber (18), the plurality of zones (40, 42, 44, 46), the heat transfer apparatus (34, 36), the conveyor assembly (24) and the heat transfer rate atmospheres, and communicating with the controller (48) for transmitting and/or receiving signals therewith.

2. The apparatus according to claim 1, wherein an inlet zone (40) of the plurality of zones (40, 42, 44, 46) is located adjacent the inlet (20) of the chamber (18) and comprises a greatest heat transfer rate atmosphere.

3. The apparatus according to claim 2, wherein the inlet zone (40) comprises fans (36), in particular convection fans, and cryogenic spray nozzles (34).

4. The apparatus according to at least one of claims 1 to 3, wherein an outlet zone (46) of the plurality of zones (40, 42, 44, 46) is located adjacent the outlet (22) of the chamber (18) and comprises a lowest heat transfer rate atmosphere.

5. The apparatus according to claim 4, wherein the outlet zone (46) comprises at least one fan (36), in particular at least one convection fan.

6. The apparatus according to at least one of claims 1 to 5, wherein the at least one cryogenic spray nozzle (34) provides a chilling medium selected from at least one of carbon dioxide, nitrogen, and liquid air.

7. The apparatus according to at least one of claims 1 to 6, wherein the product is a food product.

8. A method for reducing the temperature of a product (26), comprising:
- identifying physical characteristics and a heat profile of the product (26) prior to reducing the temperature of the product (26);
- exposing the product (26) to a plurality of heat transfer rate atmospheres arranged in descending order of heat transfer rates, said exposing the product (26) occurring first at a first one of the plurality of heat transfer rate atmospheres having a greatest heat transfer rate;
- sensing the temperature of the product (26) during the exposing to the plurality of heat transfer rate atmospheres; and
- adjusting and controlling the heat transfer rates responsive to the temperature sensed and corresponding heat profile of the product (26).

9. The method according to claim 8, wherein said physical characteristics are selected from dimensions of the product (26), composition of the product (26), and moisture content of the product (26).

10. The method according to claim 8 or 9, wherein at least one of the plurality of heat transfer atmospheres comprises a cryogen.

11. The method according to claim 10, wherein the cryogen is a substance selected from the group consisting of carbon dioxide, nitrogen, and liquid air.

12. The method according to at least one of claims 8 to 11, wherein the exposing comprises circulating at least one of the plurality of heat transfer rate atmospheres with at least one fan apparatus (36).

13. The method according to at least one of claims 8 to 12, wherein the adjusting and controlling the heat transfer rates comprises reducing exposure of the product (26) to the heat transfer rate atmospheres.

14. The method according to at least one of claims 8 to 13, wherein the adjusting comprises reducing the heat transfer rates.

15. The method according to at least one of claims 8 to 14, wherein the product is a food product.
